**Europäisches Patentamt**

**European Patent Office**

**Office européen des brevets**

(11) Veröffentlichungsnummer: **0 250 913 B1**

## (12) EUROPÄISCHE PATENTSCHRIFT

(45) Veröffentlichungstag der Patentschrift: **20.02.91**

(51) Int. Cl.⁵: **F16F 15/12**

(21) Anmeldenummer: **87108069.3**

(22) Anmeldetag: **04.06.87**

(54) **Drehschwingungstilger, insbesondere für Getriebe von Kraftfahrzeugen.**

(30) Priorität: **24.06.86 DE 3621143**

(43) Veröffentlichungstag der Anmeldung:
**07.01.88 Patentblatt 88/01**

(45) Bekanntmachung des Hinweises auf die
Patenterteilung:
**20.02.91 Patentblatt 91/08**

(84) Benannte Vertragsstaaten:
**AT BE CH DE ES FR GB GR IT LI LU NL SE**

(56) Entgegenhaltungen:
**EP-A- 0 211 701**
**DE-A- 3 529 274**
**DE-A- 3 531 115**
**DE-C- 3 334 393**
**DE-C- 3 336 174**

(73) Patentinhaber: **Clouth Gummiwerke AG**
**Niehler Strasse 92 - 116**
**D-5000 Köln 60(DE)**

(72) Erfinder: **Pulm, Toni**
**Am Waldeck 25**
**D-5204 Lohmar 1(DE)**
Erfinder: **Vorwald, Josef**
**Asternweg 118**
**D-5024 Pulheim(DE)**

(74) Vertreter: **Freischem, Werner, Dipl.-Ing.**
**Patentanwälte Dipl.-Ing. W. Freischem**
**Dipl.-Ing. I. Freischem An Gross St. Martin 2**
**D-5000 Köln 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einem Drehschwingungstilger, insbesondere für Getriebe von Kraftfahrzeugen, mit einem an einer Welle anflanschbaren Topf und einem am Umfang des Topfes über mindestens drei Gummistege elastisch angekoppelten Ring, der an seiner dem Topf zugewandten Seite mit mindestens zwei Anschlägen versehen ist, die mit einem am Umfang des Topfes radial vorstehenden Vorsprung derart zusammenwirken, daß die Pendelausschläge des Ringes um den Topf in beiden Drehrichtungen beschränkt sind, wobei die Anschläge und beziehungsweise oder der Vorsprung aus einem gummielastischen Material bestehen. Drehschwingungstilger dieser Art sind an verschiedenen Personenkraftfahrzeugen als sogenannte Resonanzschwingungsdämpfer bekannt und werden beispielsweise in der im Prioritätszeitraum dieses Patents veröffentlichten DE-A-3.531.115 beschrieben.

Die bekannten Schwingungstilger haben aufgrund der Materialdämpfung des den Topf mit dem die Schwungmasse bildenden Ring verbindenden Gummistege bei kleinen Amplituden eine gute Schwingungsdämpfung. Bei großen Amplituden reicht die Materialdämpfung jedoch nicht aus, um eine ausreichende Schwingungsdämpfung zu erreichen.

Aufgabe der Erfindung ist es, den Drehschwingungstilger der eingangs genannten Art so auszubilden, daß ohne Vergrößerung der Materialdämpfung und ohne Veränderung der Schwungmasse eine befriedigende Dämpfung nicht nur bei kleinen Schwingungsausschlägen, sondern auch bei großen Amplituden der zu dämpfenden Drehschwingung erreicht wird.

Diese Aufgabe wird erfindungsgemäß dadurch gelöst, daß zu beiden Seiten des Vorsprunges in Umfangsrichtung verlaufende Reibflächen angeordnet sind, die mit in Umfangsrichtung verlaufenden Außenflächen der Anschläge zusammenwirken. Bei diesem Drehschwingungstilger dämpft bei kleinen Amplituden allein die Materialdämpfung der Gummistege. Werden die Ausschläge größer, dann laufen die Außenflächen der Anschläge auf die Reibflächen zu beiden Seiten des Vorsprunges auf, so daß die dabei entstehende Reibung Schwingungsenergie vernichtet. Diese Reibung wird umso größer, je größer die Amplituden der zu dämpfenden Schwingung sind. Dieser Drehschwingungstilger tilgt nicht nur bei einer bestimmten Drehzahl Resonanzschwingungen rein dynamisch, sondern bewirkt auch eine gute Dämpfung in einem größeren Drehzahlbereich.

Die gleiche Aufgabe kann erfindungsgemäß auch dadurch gelöst werden, daß an den dem Vorsprung zugewandten Seiten der Anschläge in Umfangsrichtung verlaufende Reibflächen angeordnet sind, die mit der in Umfangsrichtung verlaufenden Außenfläche des Vorsprungs zusammenwirken.

Die gegeneinander reibenden Flächen, nämlich die seitlichen Reibflächen an den Vorsprüngen und den damit zusammenwirkenden Außenflächen der Anschläge oder aber die Außenflächen der Vorsprünge und die Reibflächen an der dem Vorsprung zugewandten Seite der Anschläge, verlaufen im wesentlichen parallel zueinander. Diese Flächen können aber auch so gegeneinander geneigt sein, daß der bei größer werdenden Pendelausschlägen entstehende Reibungswiderstand überproportional wächst. Hierbei ist aber darauf zu achten, daß es nicht zu einem Festklemmen kommt. Die von den elastischen Stegen bewirkte Rückstellkraft muß stets größer sein als die Reibkraft zwischen Topf und Ring.

Weitere Merkmale der Erfindung ergeben sich aus den Unteransprüchen 3 bis 10.

In der folgenden Beschreibung werden Ausführungsbeispiele des Drehschwingungstilgers nach der Erfindung unter Bezugnahme auf die Zeichnungen näher erläutert. Die Zeichnungen zeigen in

Fig. 1     eine Seitenansicht eines Drehschwingungstilgers nach der Erfindung,

Fig. 2     eine Ansicht des Drehschwingungstilgers nach der Schnittlinie II-II in Fig. 1,

Fig. 3     eine Ansicht des Drehschwingungstilgers nach der Schnittlinie III-III in Fig. 1,

Fig. 4     einen Teil einer Seitenansicht einer zweiten Ausführungsform eines Drehschwingungstilgers gemäß der Erfindung,

Fig. 5     eine Ansicht nach der Schnittlinie V-V in Fig. 4 eines Drehschwingungstilgers mit Zusatzscheibe.

Der dargestellte Drehschwingungstilger besteht aus einem Topf 1, der an eine Welle insbesondere eines Getriebes anflanschbar ist, und aus einem am Umfang des Topfes 1 über vier anvulkanisierte Gummistege 3 verbundenen Ring 2, der aufgrund seiner Masse und seiner elastischen Ankopplung gegenüber dem Topf 1 Pendelbewegungen ausführen kann.

Am Umfang des Topfes 1 sind in gleichen Abständen über den Umfang verteilt vier radial vorstehende Vorsprünge 4 angeordnet, die mit je zwei Anschlägen 5 und 6 zusammenwirken, die an der Innenseite des Ringes 2 angebracht sind. Diese Vorsprünge 4 und Anschläge 5,6 begrenzen die maximalen Pendelausschläge bzw. Amplituden des um den Topf 1 pendelnden Ringes 2.

Im Ausführungsbeispiel sind die am Topf 1 befindlichen Vorsprünge 4 starr, während die Anschläge 5 und 6 am Ring 2 aus einem gummielastischen Material bestehen. Es ist aber auch eine kinematische Umkehrung dieser Teile möglich, bei der die Vorsprünge 4 aus gummielastischem Material bestehen, während die Anschläge 5 und 6 an der Innenseite des Ringes 2 aus einem starren Material bestehen. Ferner ist es auch möglich, die elastischen Anschläge 5 und 6 am Umfang des Topfes anzuordnen, während radial nach innen vorspringende Vorsprünge 4 an der Innenseite des Ringes 2 angeordnet sind.

Zu beiden Seiten eines jeden Vorsprunges 4 sind in Umfangsrichtung verlaufende Reibflächen 7 und 8 angeordnet, die mit Umfangsrichtung verlaufenden Außenflächen 9 der am Ring 2 angeordneten Anschläge 5 und 6 zusammenwirken. Die Reibflächen 7 und 8 sowie die Außenflächen 9 der Anschläge 5 und 6 sind um die Achse des Topfes 1 gekrümmt. Weil der Durchmesser der Reibflächen 7 und 8 etwas größer ist als der Durchmesser der Außenfläche 9, schieben sich bei größer werdenden Pendelausschlägen des Ringes 2 die Außenflächen 9 der elastischen Anschläge 5 und 6 mehr oder weniger weit auf die Reibflächen 7 und 8 der Vorsprünge 4 auf. Bei diesem Aufschieben entstehen Reibungskräfte, die abhängig sind von dem Reibwert zwischen den Reibungspartnern und der Kraft, im welcher die Außenflächen der elastischen Anschläge 5 und 6 auf die Reibflächen 7 und 8 drücken. Diese Kraft ist nun wieder abhängig von den Radien, mit welchen die Reibflächen und die Außenflächen der Anschläge gekrümmt sind und von der Elastizität der Anschläge 5, 6.

Dieser Drehschwingungstilger entzieht der zu dämpfenden Welle sowohl dynamisch als auch durch Materialreibung und bei größeren Pendelausschlägen auch durch die Flächenreibung der übereinandergleitenden Flächen Schwingungsenergie.

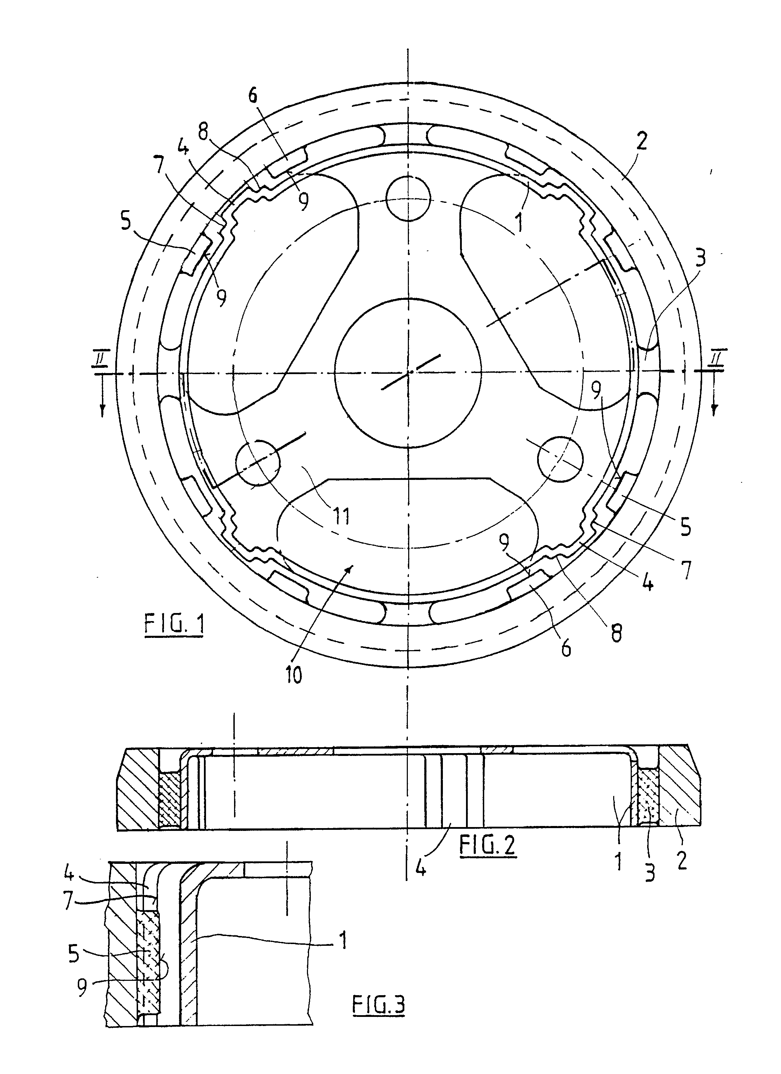

Wie die Fig. 1 zeigt, sind im Boden des Topfes 1 große Fenster 10 eingearbeitet, so daß drei Speichen 11 entstehen welche den an einer Welle oder einer Scheibe zu befestigenden Topfboden mit dem Topfmantel verbinden. Der Topf 1 besteht aus Stahlblech und die Vorsprünge 4 mit den beiden Reibflächen 7 und 8 sind aus der Wand des Topfes 1 herausgedrückt. Die Anschläge 6 und 7 bestehen aus Gummi und sind an der Innenseite des Ringes 2 anvulkanisiert. Bei der Ausführungsform nach Fig. 1 ist der Ring 2 über vier elastische Stege 3 mit dem Topf 1 verbunden. Ferner sind zwischen je zwei Stegen 3 ein Vorsprung 4 angeordnet und zwei elastische Anschläge 5 und 6. Die Anordnung der Vorsprünge 4 mit den Reibflächen 7 und 8 und den Anschlägen 5 und 6 ist so getroffen, daß sich die Reibflächen 7 und 8 über mindestens 25 % vorzugsweise aber 50 % des maximalen Pendelausschlages erstrecken. Ist beispielsweise der Pendelausschlag des Ringes gegenüber dem Topf etwa 6° nach jeder Seite, so erstreckt sich jede Reibfläche etwa über 3°. Die auflaufenden Kanten der Reibflächen 7 und 8 oder der Außenfläche 9 sind leicht abgeschrägt oder gerundet, um das Auflaufen zu erleichtern.

Es ist auch möglich, den Reibflächen 7 und 8 oder der Außenfläche 9 eine solche Neigung zu geben, daß bei größer werdenden Pendelausschlägen der Anpreßdruck der Reibflächen 7 und 8 in ihrem Endbereich größer ist als im Anfangsbereich. Diese Neigung muß aber so gewählt werden, daß ein Verklemmen des Ringes 2 auf den am Topf 1 angebrachten Reibflächen 7 und 8 nicht eintreten kann.

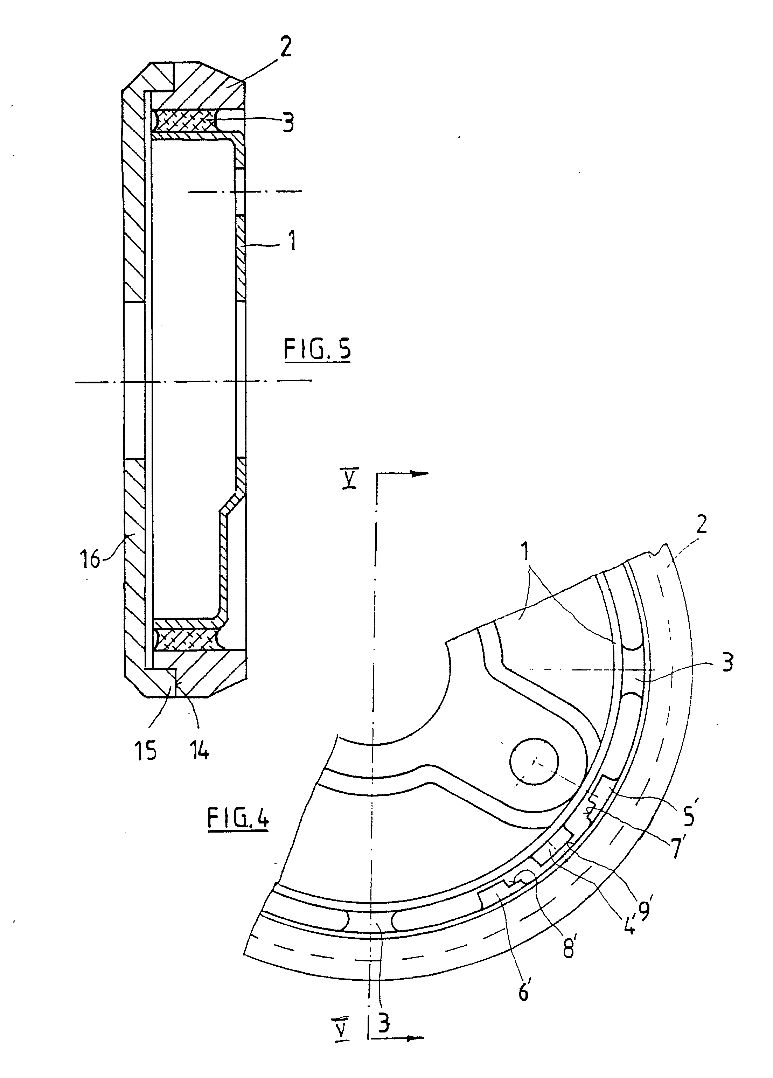

Wie Fig. 4 zeigt, können die Reibflächen 7' und 8' auch an den dem Vorsprung 4' zugewandten Seiten der an der Innenseite des Ringes 2 angebrachten Anschläge 5' und 6' angeordnet sein.

Wie die Fig. 5 zeigt, ist am Ring 2 eine konzentrische Ausnehmung 14 angebracht, in welche der Kragen 15 einer scheibenförmigen Zusatzmasse 16 eingesetzt ist. Mit Hilfe dieser Zusatzmasse 16 kann eine Feinabstimmung der Kenndrehzahl des Drehschwingungstilgers erfolgen. Die scheibenförmige Zusatzmasse 16 vergrößert die pendelnde Masse, ohne wesentlich mehr Raum zu beanspruchen, der gerade bei Kraftfahrzeuggetrieben sehr beengt ist.

Der Kragen 15 der scheibenförmigen Zusatzmasse 16 kann durch Punktschweißung mit dem Ring 2 verbunden werden.

## Ansprüche

1. Drehschwingungstilger, insbesondere für Getriebe von kraftfahrzeugen, mit einem an einer Welle anflanschbaren Topf (1) und einem am Umfang des Topfes (1) über mindestens drei Gummistege (3) elastisch angekoppelten Ring (2), der an seiner dem Topf (1) zugewandten Seite mit mindestens zwei Anschlägen (5,6) versehen ist, die mit einem am Umfang des Topfes (1) radial vorstehenden Vorsprung (4) derart zusammenwirken, daß die Pendelausschläge des Ringes (2) um den Topf (1) in beiden Drehrichtungen beschränkt sind, wobei die Anschläge (5,6) und beziehungsweise oder der Vorsprung (4) aus einem gummielastischen Material bestehen, dadurch gekennzeichnet, daß zu beiden Seiten des Vorsprunges (4) in Umfangsrichtung verlaufende Reibflächen (7 und 8) angeordnet sind, die mit in Umfangsrichtung verlaufenden Außenflächen (9) der Anschläge (5,6) zusammenwirken.

2. Drehschwingungstilger, insbesondere für Getriebe von Kraftfahrzeugen, mit einem an einer Welle anflanschbaren Topf (1) und einem am Umfang des Topfes (1) über mindestens drei Gummistege (3) elastisch angekoppelten Ring (2), der an seiner dem Topf (1) zugewandten Seite mit mindestens zwei Anschlägen (5',6') versehen ist, die mit einem am Umfang des Topfes (1) radial vorstehenden Vorsprung (4') derart zusammenwirken, daß die Pendelausschläge des Ringes (2) um den Topf (1) in beiden Drehrichtungen beschränkt sind, wobei die Anschläge (5',6') und beziehungsweise oder der Vorsprung (4') aus einem gummielastischen Material bestehen, dadurch gekennzeichnet, daß an den dem Vorsprung (4') zugewandten Seiten der Anschläge (5' und 6') in Umfangsrichtung verlaufende Reibflächen (7' und 8') angeordnet sind, die mit der in Umfangsrichtung verlaufenden Außenfläche (9') des Vorsprungs (4') zusammenwirken.

3. Drehschwingungstilger nach Anspruch 1 oder 2, dadurch gekennzeichnet, daß der Vorsprung (4,4') mit den Reib flächen einstückig mit dem Topf (1) verbunden ist.

4. Drehschwingungstilger nach Anspruch 1, dadurch gekennzeichnet, daß der Vorsprung (4) mit den beiden Reibflächen (7, 8) aus einer aus Stahlblech bestehenden Wand des Topfes (1) herausgedrückt ist.

5. Drehschwingungstilger nach einem der Ansprüche 1 bis 4, dadurch gekennzeichnet, daß die Anschläge (5,5' und 6,6') aus Gummi bestehen und an der Innenseite des Ringes (2) anvulkanisiert sind.

6. Drehschwingungstilger nach Anspruch 1, dadurch gekennzeichnet, daß der Krümmungsradius der Reibflächen (7,8) um 0,1 bis 0,5 mm größer ist als der Krümmungsradius der damit zusammenwirkenden Außenflächen (9) der Anschläge (5,6).

7. Drehschwingungstilger nach Anspruch 2, dadurch gekennzeichnet, daß der Krümmungsradius der Reibflächen /7',8') an den Anschlägen (5', 6') um 0,1 bis 0,5 mm kleiner ist als der Krümmungsradius der damit zusammenwirkenden Außenfläche (9') des Vorsprunges (4').

8. Drehschwingungstilger nach einem der Ansprüche 1 bis 7, dadurch gekennzeichnet, daß zwischen den Gummistegen (3) je ein Vorsprung (4,4') und mit diesem Vorsprung (4,4') zusammenwirkende Anschläge 5,5', 6,6') angeordnet sind.

9. Drehschwingungstilger nach einem der Ansprüche 1 bis 8, dadurch gekennzeichnet, daß sich die Reibflächen (7,8) über mindestens 25 % und vorzugsweise 50 % des maximalen Pendelausschlages erstrecken.

10. Drehschwingungstilger nach einem der Ansprüche 1 bis 9, dadurch gekennzeichnet, daß am Ring (2) eine konzentrische Ausnehmung (14) angeordnet ist, in die ein Kragen (15) einer Zusatzscheibe (16) einsetzbar ist.

## Claims

1. A torsional damper, especially for motor vehicle transmission gears, having a pot (1) that can be flanged to a shaft, and a ring (2) which is coupled in a resilient manner to the circumference of the pot (1) via at least three rubber webs (3), and has on the side facing the pot (1) at least two buffers (5,6) which interact with a radially extending projection (4) on the circumference of the pot (1) in such a manner as to limit the oscillatory movements of the ring (2) about the pot (1) in both rotational directions, wherein the buffers (5,6) and/or the projection (4) are of an elastic material, characterised in that on both sides of the projection (4) there are circumferentially extending friction surfaces (7 and 8) which interact with circumferentially extending, exposed, surfaces (9) of the buffers (5,6).

2. A torsional damper, especially for motor vehicle transmission gears, having a pot (1) that can be flanged to a shaft, and a ring (2) which is coupled in a resilient manner to the circumference of the pot (1) via at least three rubber webs (3) , and has on the side facing the pot (1) at least two buffers &5', 6') which interact with a radially extending projection (4') on the circumference of the pot (1) in such a manner as to limit the oscillatory movements of the ring (2) about the pot (1) in both rotational directions, wherein the buffers (5' ,6') and/or the projection (4') are of an elastic material, characterised in that the buffers (5' and 6') on the side facing the projection (4') have circumferentially extending friction surfaces (7' and 8') which interact with the circumferentially extending, exposed,surface (9') of the projection (4').

3. The torsional damper according to claim 1 or claim 2, characterised in that the projection (4, 4')with the friction surfaces (sic) is joined to the pot (1) so as to form an integral part thereof.

4. The torsional damper according to claim 1, characterised in that the projection (4) having the two friction surfaces (7, 8 ) is an embossing of a wall of the pot (1) which is made from steel sheet.

5. The torsional damper according to any one of claims 1 to 4, characterised in that the buffers (5, 5' and 6, 6') consist of rubber and are moulded to the inward side of the ring (2).

6. The torsional damper according to claim 1, characterised in that the radius of curvature of the friction surfaces (7, 8) is 0.1 to 0.5 mm greater than the radius of curvature of the exposed surfaces(9) of the buffers (5,6) interacting with the said friction surfaces.

7. The torsional damper according to claim 2, characterised in that the radius of curvature of the friction surfaces (7', 8') on the buffers (5', 6') are 0.1 to 0.5 mm smaller than the radius of curvature of the exposed surface (9') of the projection (4') interacting with the said friction surfaces.

8. The torsional damper according to any one of claims 1 to 7, characterised in that between every two rubber webs (3) there are arranged a projection (4, 4') and buffers (5, 5' ,6,6') interacting with this projection (4, 4').

9. The torsional damper according to any one of claims 1 to 8, characterised in that the friction surfaces (7, 8) extend over at least 25%, preferably 50%, of the maximum oscillation amplitude.

10. The torsional damper according to any one of claims 1 to 9, characterised in that the ring (2) has a concentric recess (14) in which can be inserted the collar (15) of an additional disc (16).

**Revendications**

1. Amortisseur de vibrations dues à la rotation, en particulier pour boite de vitesses de camions, avec un pot (1) bridé à un axe et, couplé de manière élastique sur le pourtour du pot, par au moins trois tiges de caoutchouc (3), un anneau (2), qui est muni sur son côté tourné vers le pot (1) d'au moins deux butées (5,6), qui coopèrent avec un ressaut saillant radial (4), de sorte que les amplitudes des oscillations pendulaires de l'anneau (2) autour du pot (1) sont limitées dans les deux sens de rotation, les butées (5,6) et/ou le ressaut (4) étant en une matière élastique en caoutchouc, caracté risé en ce que sur les deux côtés du ressaut (4), sont prévues des surfaces de friction (7) et (8) situées sur le pourtour qui coopèrent avec des surfaces extérieures (9) dans la direction du pourtour, des butées (5,6).

2. Amortisseur de vibrations dues à la rotation, en particulier pour boite de vitesses de camions, avec un pot (1), bridé à un axe et, couplé de manière élastique sur le pourtour du pot par au moins trois tiges de caoutchouc (3), un anneau (2), qui est muni sur son côté tourné vers le pot (1) d'au moins deux butées (5' ,6'), qui coopèrent avec un ressaut saillant radial (4'), de sorte que les amplitudes des oscillations pendulaires de l'anneau (2) autour du pot (1) sont limitées dans les deux sens de rotation, les butées (5' ,6') et/ou le ressaut (4') étant en une matière élastique en caoutchouc, caractérisé en ce que sur les côtés des butées (5' ,6') tournées vers le ressaut (4'), sont prévues des surfaces de friction (7') et (8') situées sur le pourtour qui coopèrent avec des surfaces extérieures (9') dans la direction du pourtour, des butées (5' ,6').

3. Amortisseur de vibrations dues à la rotation selon la revendication 1 ou 2, caractérisé en ce que le ressaut (4,4') avec les surfaces de friction est d'un seul tenant avec le pot (1).

4. Amortisseur de vibrations dues à la rotation selon la revendication 1, caractérisé en ce que le ressaut (4,4') avec les deux surfaces de friction (7,8) est une partie repoussée vers l'extérieur de la paroi en tôle d'acier du pot (1).

5. Amortisseur de vibrations dues à la rotation selon l'une des revendications 1 à 4, caractérisé en ce que les butées (5,5') et (6,6') sont en caoutchouc et sont vulcanisées sur la face interne de l'anneau (2).

6. Amortisseur de vibrations dues à la rotation selon la revendication 1, caractérisé en ce que le rayon de courbure des surfaces de friction (7,8) est plus grand de 0,1 à 0,5 millimètre que le rayon de courbure des surfaces externes correspondantes des butées (5,6).

7. Amortisseur de vibrations dues à la rotation selon la revendication 2, caractérisé en ce que le rayon de courbure des surfaces de friction (7',8') sur les butées (5',6') est plus petit de 0,1 à 0,5 millimètre que le rayon de courbure des surfaces extérieures correspondantes (9') du ressaut (4').

8. Amortisseur de vibrations dues à la rotation selon l'une des revendications 1 à 7, caractérisé en ce que, entre les tiges de caoutchouc (3), sont disposés un ressaut (4') et des butées (5,5', 6,6') correspondant à ce ressaut (4,4').

9. Amortisseur de vibrations dues à la rotation selon l'une des revendications 1 à 8, caractérisé en ce que les surfaces de friction (7,8) s'étendent sur au moins 25 % et de préférence 50 % de l'amplitude maximale pendulaire.

10. Amortisseur de vibrations dues à la rotation selon l'une des revendications 1 à 9, caractérisé en ce que sur l'anneau (2), se trouve un évidement concentrique (14), dans lequel on peut insérer une collerette (15) d'un disque supplémentaire (16).

FIG. 1

FIG. 2

FIG. 3

FIG. 5

FIG. 4